Europäisches Patentamt

European Patent Office

Office européen des brevets

(11) Publication number: **0 049 359**
**B1**

# EUROPEAN PATENT SPECIFICATION

(45) Date of publication of patent specification: **05.03.86**

(51) Int. Cl.⁴: **H 04 N 1/46**

(21) Application number: **81106703.2**

(22) Date of filing: **28.08.81**

(54) Colour separation scanner and method of operation.

(30) Priority: **06.10.80 US 194208**

(43) Date of publication of application:
**14.04.82 Bulletin 82/15**

(45) Publication of the grant of the patent:
**05.03.86 Bulletin 86/10**

(84) Designated Contracting States:
**DE FR GB**

(56) References cited:
**US-A-3 867 569**

**PATENTS ABSTRACTS OF JAPAN, vol. 3, no.
103(E-134), 31st August 1979, page 72E134**

**PATENTS ABSTRACTS OF JAPAN, vol. 4, no.
148(E-30) (630), 18th October 1980, page 5E30**

**PATENTS ABSTRACTS OF JAPAN, vol. 4, no.
44(E-5)(526), page 50E5**

(73) Proprietor: **International Business Machines
Corporation
Old Orchard Road
Armonk, N.Y. 10504 (US)**

(72) Inventor: **White, James Merrill
10336 Apple Way Court
Mint Hill North Carolina 28212 (US)**

(74) Representative: **Atchley, Martin John
Waldegrave
IBM United Kingdom Patent Operations Hursley
Park
Winchester, Hants, SO21 2JN (GB)**

Courier Press, Leamington Spa, England.

**Description**

This invention relates to colour separation scanners comprising an optical system for focussing an image of a target region onto a photosensitive transducer for producing an electronic image of the light received thereby, and to methods of operation thereof.

The separation of a coloured image into components of primary colours is normally accomplished through the use of separate filters or light sources for each of the primary colours to measure the reflectance of the image on a point-by-point basis for light of each primary colour.

The publication "Patents Abstracts of Japan, Volume 3, No. 103 (E—134), 31 August 1979, page 72E134" provides an abstract of JP—A—54 81715 (MITSUBISHI DENKI K. K.) which discloses a colour scanner including three fluorescent lamps each having a phosphor of a different colour. The light from the lamps illuminates a target. A photosensitive device receives light reflected from the target. A control system energises the lamps in succession so that the target is illuminated with light of each of the three colours in succession. The colours of the phosphors are chosen so that each colour does not include either of the other two colours. As a result when the target is illuminated with light from any one of the lamps it is not illuminated with light of a colour which is the same as any of the colours of the light from the other lamps.

The invention seeks to provide for two-colour separation through the use of a single lamp and without the use of filters.

According to the invention a colour separation scanner comprises an optical system for focussing an image of a target onto a photosensitive transducer for producing an electronic image of the light received thereby, and a fluorescent lamp positioned to illuminate the target region. The lamp has first and second light output modes responding to first and second conditions of activation. The first light output mode provides light comprising principally a mixture of first and second colours and the second light output mode providing light comprising principally light of the second colour.

The scanner also comprises activation control means connected to the lamp for cyclically applying the first and second conditions of activation thereto, and computational means responsive to the electronic images produced from the light reflected from the target region during the first and second light output modes for producing first and second colour-separated electronic images.

The scanner is characterised in that the fluorescent lamp includes at least two essentially different phosphors, the first of which emits, upon excitation, light of the first colour, and the second of which emits, upon excitation, light of the second colour. The phosphors are chosen so that the persistence of light emission of the second colour phosphor is substantially greater than the persistence of light emission of the first colour phosphor.

The scanner is further characterised in that the first condition of activation comprises the supply of light driving current to the fluorescent lamp and the second condition of activation comprises the absence of such driving current after its supply.

The invention also seeks to provide for three-colour separation through the use of two lamps and without the use of filters.

For this, the invention is further characterised by a second fluorescent lamp positioned to illuminate the target region, the second lamp having first and second light output modes responding to alternate conditions of activation, the first light output mode of the second fluorescent lamp providing light comprising a third colour and the second light output mode of the second lamp comprising a substantial absence of the third colour, and further activation control means connected to the second lamp for cyclically applying the alternate conditions of activation thereto, the computational means being further responsive to the electronic images produced from light reflected from the target region during the first and second light output modes of the second lamp for producing first, second and third colour-separated electronic images.

The invention further seeks to provide a colour separation scanner that is particularly suited for use with an elongaged charge transfer image pickup device.

In this respect, the invention is characterised in that the target region comprises an elemental line, the transducer comprises a linear array of photosensors, and the fluorescent lamp or each of the lamps comprises an elongated tube positioned adjacent to and parallel with the elemental line.

In embodiments of the invention, use is made of fluorescent lamp having a mixture of phosphors that produce different colours and have significantly different persistence. Thus, a fluorescent lamp having blue phosphors of very short persistence and red phosphors of long persistence will, when energized, provide light that is a mixture of red and blue. Immediately after the lamp is de-energized, the red light will remain, due to the greater persistence of the red phosphors. A target, thus, is sequentially illuminated, first with a red/blue light mixture and, second, by just the red component of the mixture. By subtracting the reflectance of the target under red light from that under the mixture of red and blue light, the reflectance of the object under pure blue light can be ascertained.

The addition of an alternately energized second lamp, having a single phosphor, e.g., green or yellow/green, provides the three primary colours necessary for a full-colour image detection.

This may be provided by a pair of tubular fluorescent bulbs which is especially well suited to provide a symmetrical light source for an elongated image-sensing array such as those using charge transfer for solid state scanning. One lamp is simply positioned on either side of the topical path through which a line of the image is projected to the scanning array. With this arrangement, the colour separation becomes completely electronic in both the control of the lamps and separation of the resultant signals.

The scope of the invention is defined by the appended claims; and how it can be carried into effect is hereinafter particularly described with reference to the accompanying drawings, in which:—

FIGURE 1 is a diagrammatic view of a colour separation scanner in accordance with the invention;

FIGURE 2 is an explanatory graph illustrating a simplified time sequence of operation of the scanner of Fig. 1;

FIGURE 3 is a graphical representation of a preferred lamp energization pattern for use with the scanner in Fig. 1; and

FIGURE 4 is a circuit diagram of a computational matrix for separating mixed colour signals of the type produced from a lamp energization pattern, as illustrated in Fig. 3.

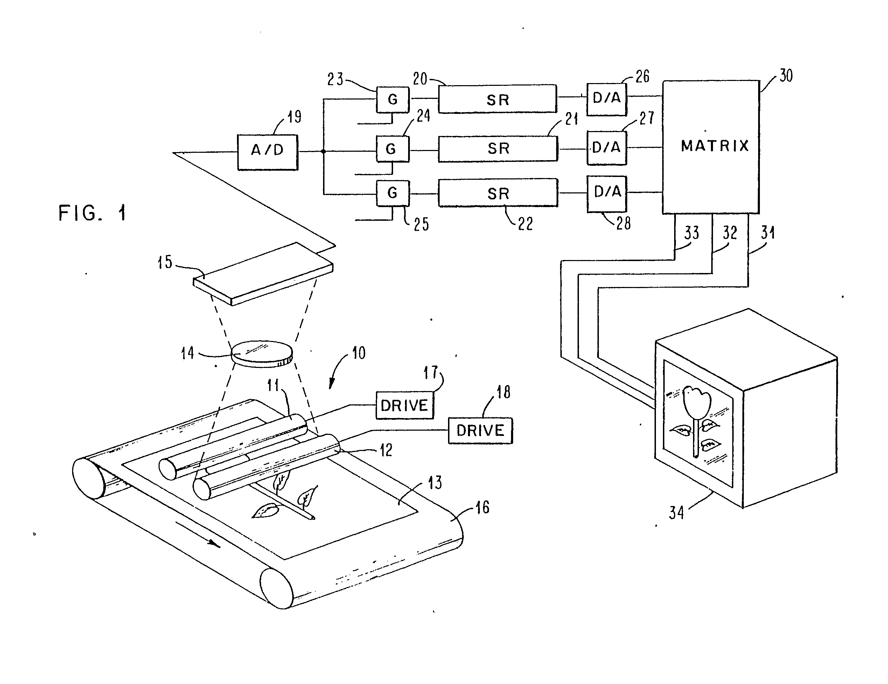

In a preferred embodiment of the invention, a colour separation scanner 10 (Fig. 1) includes a pair of illumination lamps 11 and 12, positioned adjacent a scanning or target region to illuminate an elemental line of a document 13. An optical lens system 14, directed at the scanning region of document 13, focusses an image of the elemental line onto the light sensitive points of a solid state linear array photosensor or transducer 15. The details of photosensor 15 are not critical to this invention, and any relatively panchromatic photosensitive array, such as a charge-coupled device of the type commercially known as CCD, will be suitable. A conveyor 16 moves the document 13 past the scanning region so that successive lines are presented to the photosensor 15.

The envelope of lamp 11 is coated with a mixture of phosphors of different colours and persistences, in this case, red and blue phosphors. Suitable phosphors would include Sylvania Type No. 290 which is calcium metasilicate: Mn:Pb which produces red light peaking at 615 nanometres and having a slow decay time of $3.2 \times 10^{-2}$ sec, and Sylvania Type No. 243 which is Strontium Pyrophosphate: Sn which produces blue light peaking at 460 nanometres and having a fast decay time of $6.7 \times 10^{-6}$ sec. The envelope of lamp 12 is coated with phosphor of a different colour, in this case, yellow/green phosphor; for example, Sylvania Type No. 250 which is Strontium Halophosphate: Sb:Mn which produces yellow/green light, peaking at 578 nanometres and having a fast decay time of $1.2 \times 10^{-5}$ sec.

The characteristic of the red phosphors is to provide a relatively long persistence, such that in the presence of an alternating lamp excitation current, the red output remains relatively constant. In distinction to this long persistence, the green and especially the blue phosphors tend to produce a light output that closely parallels the changes in excitation current. Thus, the document 13 will be illuminated with a mixture of red and blue light when lamp 11 alone is driven, and will be illuminated with a mixture of green and persisting red light when lamp 12 alone is driven. For a short period following termination of either drive pulses to lamps 11 and 12, the document will be illuminated essentially by red light persisting from lamp 11. These different mixtures of light or light output modes are used to provide colour separation, using a single photosensor array 15 and only electronically activated controls.

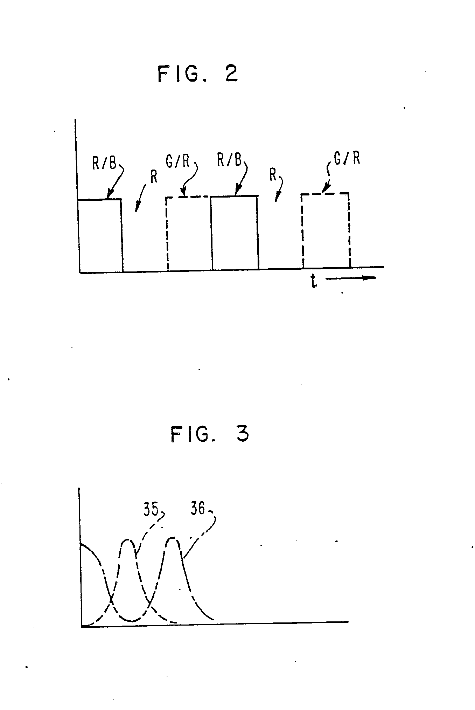

Each elemental line of document 13 will be subjected to a scanning or activating cycle consisting of three sub-cycles or light mixture output modes controlled by lamp driving circuits 17 and 18. In Fig. 2, these are shown as R/B (red/blue) when lamp 11 is on, R (red) when both lamps are off, and G/R (green/red) when lamp 12 is on. During each sub-cycle, a photosensor image of the line will be formed as electrostatic charge packets in the photosensor 15 (Fig. 1) for each picture element or pel along the line. Each charge packet is delivered as a pulse to an analog-to-digital converter 19, whereby its analogue magnitude is represented in terms of a binary word. For example, a 6-bit binary word would represent the reflected light intensity on a scale between 0 and 63.

The digitized value of each pel is set into an appropriate one of three shift registers 20, 21 and 22, which correspond respectively to the three illumination modes of the lamps 11 and 12. Selection of the shift registers is controlled by their associated gates 23, 24 and 25. The three reflectance value words relating to a single pel are brought through digital-to-analog converters 26, 27 and 28 to computational circuitry 30 for simultaneous processing.

Circuitry 30 essentially subtracts the reflectance value of the electronic image produced under red light, stored in shift register 21, from the value produced under the mixtures of red-and-blue and red-and-green lights, as stored in shift registers 20 and 22 respectively. The resultant values represent a basic colour-separated electronic image, presented on three separate outputs 31, 32 and 33 of the circuitry 30, representing respectively the reflectivity of the document 13 to the colours blue, red and green. These signals now are suitable for the control of a colour light display, such as a colour television display 34, for reproducing the original image, picture element by picture element.

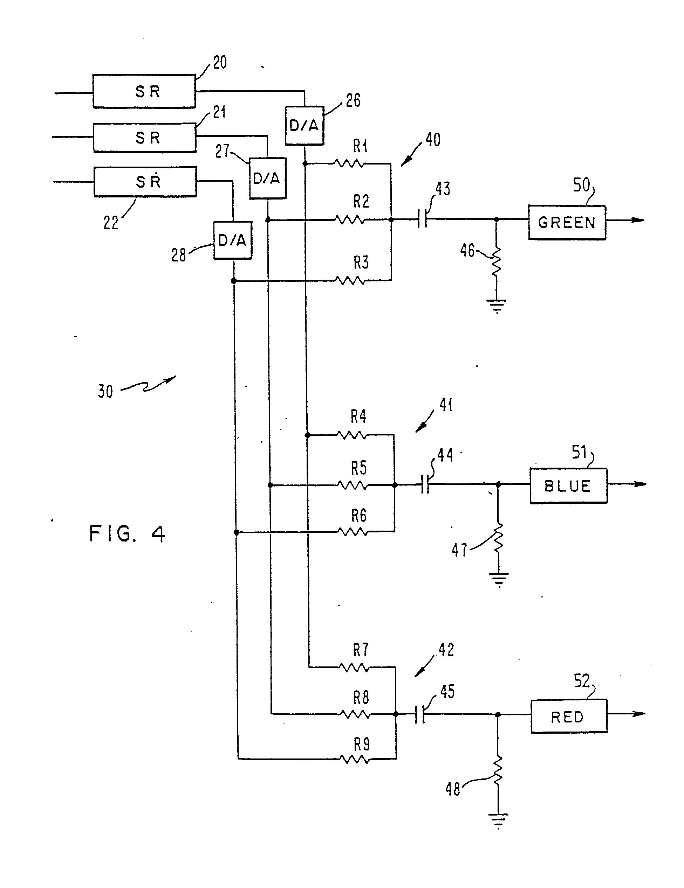

It is preferred that the lamp driving circuits 17 and 18 produce lamp excitation wave forms 35 and 36 (Fig. 3) for lamps 11 and 12, respectively. The excitation current wave for each lamp is preferably offset by 90°, such that lamp 11 will be fully driven at times when lamp 12 receives zero driving current and, conversely, lamp 12 is fully driven at times when lamp 11 receives zero driving current. Midway between the two peak driving conditions, both lamps 11 and 12 will be driven at substantially less than their peaks, and during this condition the persistent red generated by lamp 11 will be the dominant colour emitted. In this respect, a period of red illumination (R) is interposed between the green/red illumination (G/R) and the blue/red illumination (R/B) in Fig. 2. These offset wave forms thus excite the lamps 11 and 12 to provide continually varying mixtures of light output. Photosensor 15 is sampled in synchronism with the excitation wave forms to capture the light reflection during three different light mixture output modes to produce the reflectance values to be entered into shift registers 20, 21 and 22. Because actual sampling times span intervals when all colours of light are present, even if in small amounts, it is preferred to employ as computational circuitry 30 a signal-separating matrix circuit of the type well known in colour television receivers. A simplified version of such a matrix is shown in Fig. 4. The matrix consists of nine resistors R1 to R9, grouped into three parallel sets 40, 41 and 42. For each set, DC blocking capacitor 43, 44 or 45 passes an algebraically combined current to a voltage signal developing resistor 46, 47 or 48.

Each voltage signal thus developed is applied to the input of one of three primary colour amplifiers 50, 51 and 52. The resistors of each set 40, 41 and 42 receive analog voltage levels from the digital-to-analog converters 26, 27 and 28, connected to the output stages of the shift registers 20, 21 and 22. Thus, analog voltage pulses, representative of the reflectance from a target object under three different light conditions, are simultaneously applied to each of the resistor sets. The resistors R1 to R9 are selected in magnitude to divide the voltages by percentages necessary properly to separate the colour signals. This matrix essentially solves three simultaneous linear equations which express the light reflected from an unknown target object in response to three known light mixtures. Depending upon the mixtures of light, it may be required that one or more of the voltages applied to a particular resistor set have a negative sign, in which case a negative output is provided from the associated digital-to-analog converter 26, 27 or 28.

Those skilled in the art will appreciate that the simultaneous equations could be solved with equal facility through the use of digital computation, directly taken from the signals supplied from shift registers 20, 21 and 22. It is preferred to use the resistor matrix disclosed, due to the simplicity of the computation involved and the ease by which this type of computation can be performed with analog circuitry.

If two-colour image detection is required, then a single lamp containing phosphors of different colours and persistences can be used, with appropriate changes in the circuitry involved.

## Claims

1. A colour separation scanner comprising an optical system (14) for focussing an image of a target (13) onto a photosensitive transducer (15) for producing an electronic image of the light received thereby,
a fluorescent lamp (11) positioned to illuminate the target region,
the lamp having first and second light output modes responding to first and second conditions of activation,
the first light output mode providing light comprising principally a mixture of first and second colours
and the second light output mode providing light comprising principally light of the second colour,
activation control means (17) connected to the lamp for cyclically applying the first and second conditions of activation thereto,
and computational means (30) responsive to the electronic images produced from the light reflected from the target region during the first and second light output modes for producing first and second colour-separated electronic images, characterised in that
said fluorescent lamp includes at least two essentially different phosphors, the first of which emits, upon excitation, light of the first colour, and the second of which emits, upon excitation, light of the second colour,
and wherein the persistence of light emission of the second colour phosphor is substantially greater than the persistence of light emission of the first colour phosphor, and in that
said first condition of activation comprises the supply of light driving current to the fluorescent lamp and said second condition of activation comprises the absence of such driving current after its supply.

2. A scanner according to claim 1, in which the target region comprises an elemental line, the transducer comprises a linear array of photosensors and the fluorescent lamp comprises an elongated tube positioned adjacent to and parallel with the elemental line.

3. A scanner according to claim 1 or 2, in which the computational means subtracts the electronic image produced during the second light output mode from the electronic image produced during the first light output mode.

4. A scanner according to any preceding claim, including a second fluorescent lamp (12) positioned to illuminate the target region, the second lamp having first and second light output modes responding to alternate conditions of activation, the first light output mode of the second fluorescent lamp providing light comprising a third colour and the second light output mode of the second lamp comprising a substantial absence of the third colour, and further activation control means (18) connected to the second lamp for cyclically applying the alternate conditions of activation thereto, the computational means (30) being further responsive to the electronic images produced from light reflected from the target region during the first and second light output modes of the second lamp for producing first, second and third colour-separated electronic images.

5. A scanner according to claim 4, in which the second lamp includes a phosphor, the persistence of light emission of which is substantially less than the persistence of light emission of the second colour phosphor.

6. A scanner according to claim 4 or 5 in which the first colour is red, the second colour is blue and the third colour is green.

7. A scanner according to claim 4, 5 or 6, as appendant to claim 2 or any claim appendant thereto, in which the fluorescent lamps comprise elongated tubes positioned on either side and parallel with the elemental line.

8. A scanner according to claim 4, 5, 6 or 7, as appendant to claim 3 in which the computational means subtracts the electronic image produced during the second light output mode of the lamp from the electronic image produced during the first light output mode of the second lamp.

9. A method of operating a scanner according to any of claims 1 to 3, comprising alternately activating and de-activating the fluorescent lamp (11).

10. A method of operating a scanner according to any of claims 4 to 8, comprising alternately activating the fluorescent lamp (11) and the second fluorescent lamp (12).

**Revendications**

1. Un dispositif d'analyse à séparation de couleurs, comprenant:

— un système optique (24) pour former une image d'une cible (13) sur un transducteur photosensible (15) afin de produire une image électronique de la lumière reçue par celui-ci,

— une lampe fluorescente (11) positionnée de manière à éclairer la zone-cible,

— la lampe comportant des premier et second modes de sortie de lumière répondant à des première et seconde conditions d'activation,

— le premier mode de sortie de lumière produisant de la lumière comprenant principalement un mélange d'une première et d'une seconde couleur,

— et le second mode de sortie de lumière produisant de la lumière comprenant principalement une lumière de la seconde couleur,

— un moyen de commande d'activation (17) relié à la lampe pour appliquer cycliquement les première et seconde conditions d'activation à celle-ci,

— et un moyen de calcul (30) répondant aux images électroniques produites à partir de la lumière réfléchie par la zone-cible pendant les premier et second modes de sortie de lumière pour produire des première et seconde images électroniques à séparation de couleurs, caractérisé en ce que:

— ladite lampe fluorescente comprend au moins deux luminophores essentiellement différents, dont le premier émet, lors d'une excitation, une lumière de la première couleur tandis que le second émet, lors d'une excitation, une lumière de la seconde couleur,

— et dans lequel la persistance d'émission lumineuse du luminophore de seconde couleur est sensiblement plus grande que la persistance d'émission lumineuse du luminophore de première couleur,

— et en ce que ladite première condition d'activation consiste à appliquer un courant d'excitation de lumière à la lampe fluorescente et ladite seconde condition d'activation consiste dans l'absence dudit courant d'excitation après son application.

2. Un dispositif d'analyse selon la revendication 1, dans lequel la zone-cible comprend une ligne élémentaire, le transducteur comprend un réseau linéaire de photodétecteurs et la lampe fluorescente comprend un tube allongé placé dans une position adjacente à la ligne élémentaire et parallèlement à celle-ci.

3. Un dispositif d'analyse selon la revendication 1 ou 2, dans lequel le moyen de calcul soustrait l'image électronique produite pendant le second mode de sortie de lumière de l'image électronique produite pendant le premier mode de sortie du lumière.

4. Un dispositif d'analyse selon une quelconque des revendications précédentes, comprenant une seconde lampe fluorescente (12) positionnée de manière à éclairer la zone-cible, la seconde lampe comportant des premier et second modes de sortie de lumière répondant à des conditions alternées d'activation, le premier mode de sortie de lumière de la seconde lampe fluorescente établissant une lumière comprenant une troisième couleur et le second mode de sortie de lumière de la seconde lampe correspondant sensiblement à une absence de la troisième couleur, et en outre un moyen de commande d'activation (18) relié à la seconde lampe pour appliquer cycliquement les conditions alternées d'activation à celle-ci, le moyen de calcul (30) répondant en outre aux images électroniques produites par la lumière réfléchie par la zone-cible pendant les premier et second modes de sortie de lumière de la seconde lampe afin de produire des première, seconde et troisième images électroniques à séparation de couleurs.

5. Un dispositif d'analyse selon la revendication 4, dans lequel la seconde lampe comprend un luminophore, dont la persistance d'émission lumineuse est sensiblement inférieure à la persistance d'émission lumineuse du luminophore de seconde couleur.

6. Un dispositif d'analyse selon la revendication 4 ou 5, dans lequel la première couleur est rouge, la seconde couleur est bleue et la troisième couleur est verte.

7. Un dispositif d'analyse selon la revendication 4, 5 ou 6, rattachées à la revendication 2 ou à une revendication quelconque rattachée celle-ci, dans lequel les lampes fluorescentes comprennent des tubes allongés positionnés de part et d'autre de la ligne élémentaire et parallèlement à celle-ci.

8. Un dispositif d'analyse selon la revendication 4, 5, 6 ou 7, rattachées à la revendication 3, dans lequel le moyen de calcul soustrait l'image électronique produite pendant le second mode de sortie de lumière de la lampe de l'image électronique produite pendant le premier mode de sortie de lumière de la seconde lampe.

9. Un procédé de commande d'un dispositif d'analyse conforme à une quelconque des revendications 1 à 3, consistant à activer et désactiver alternativement la lampe fluorescente (11).

10. Un procédé de commande d'un dispositif d'analyse conforme à une quelconque des revendications 4 à 8, consistant à activer alternativement la lampe fluorescente (11) et la seconde lampe fluorescente (12).

**Patentansprüche**

1. Farbauszugs-Scanner mit
einem optischen System (14) zur Fokussierung eines Bildes eines Ziels (13) auf einen lichtempfindlichen Wandler (15) zur Erzeugung eines elektronischen Bildes des so erhaltenen Lichts,
einer Leuchtstofflampe (11), die so angeordnet ist, daß sie den Zielbereich beleuchtet,
wobei die Lampe eine erste und eine zweite Lichtausgabeweise entsprechend einer ersten und einer zweiten Aktivierungsbedingung hat,
wobei die erste Lichtausgabeweise Licht liefert, welches hauptsächlich ein Gemisch aus einer ersten und einer zweiten Farbe umfaßt,
wobei die zweite Lichtausgabeweise Licht liefert, welches hauptsächlich Licht der zweiten Farbe umfaßt,
mit der Lampe verbundenen Aktivierungssteuermitteln (17) zur zyklischen Aufgabe der ersten und zweiten Aktivierungsbedingung auf jene,
und Berechnungsmitteln (30), die zur Erzeugung eines ersten und zweiten elektronischen Farbauszugsbildes auf die elektronischen Bilder ansprechen, die aus dem am Zielbereich während der ersten und zweiten Lichtausgabeweise reflektierten Licht erzeugt werden, dadurch gekennzeichnet, daß
die Leuchtstofflampe wenigstens zwei wesentlich verschiedene Phosphore enthält, von denen der erste bei Anregung Licht der ersten Farbe und der zweite bei Anregung Licht der zweiten Farbe emittiert,
und wobei die Nachleuchtdauer des Phosphors der zweiten Farbe wesentlich größer als die Nachleuchtdauer des Phosphors der ersten Farbe ist, und daß
die erste Aktivierungsbedingung die Zufuhr von Lichtanregungsstrom an die Leuchtstofflampe und die zweite Aktivierungsbedingung das Fehlen eines solchen Anregungsstromes nach seiner Zufuhr umfaßt.

2. Scanner nach Anspruch 1, bei welchem der Zielbereich eine Elementarlinie umfaßt, der Wandler eine lineare Anordnung von Photosensoren umfaßt und die Leuchtstofflampe eine langgestreckte Röhre umfaßt, welche benachbart und parallel zur Elementarlinie angeordnet ist.

3. Scanner nach Anspruch 1 oder 2, bei welchem die Berechnungsmittel das während der zweiten Lichtausgabeweise erzeugte elektronische Bild vom während der ersten Lichtausgabeweise erzeugten elektronischen Bild subtrahieren.

4. Scanner nach irgendeinem vorstehenden Anspruch, welcher eine zweite Leuchtstofflampe (12), welche so angeordnet sit, daß sie den Zielbereich beleuchtet, wobei die zweite Lampe eine erste und eine zweite Lichtausgabeweise entsprechend abwechselnden Aktivierungsbedingungen hat, wobei die erste Lichtausgabeweise der zweiten Leuchtstofflampe Licht liefert, welches eine dritte Farbe umfaßt, und die zweite Lichtausgabeweise der zweiten Lampe ein wesentliches Fehlen der dritten Farbe umfaßt, und ferner mit der zweiten Lampe verbundene Aktivierungssteuermittel (18) zur zyklischen Aufgabe der abwechselnden Aktivierungsbedingungen auf diese enthält, wobei die Berechnungsmittel (30) zur Erzeugung eines ersten, zweiten und dritten elektronischen Farbauszugsbildes ferner auf die elektronischen Bilder ansprechen, die aus dem am Zielbereich während der ersten und der zweiten Lichtausgabeweise der zweiten Lampe reflektierten Licht erzeugt werden.

5. Scanner nach Anspruch 4, bei welchem die zweite Lampe einen Phosphor enthält, dessen Nachleuchtdauer wesentlich geringer als die Nachleuchtdauer des Phosphors der zweiten Farbe ist.

6. Scanner nach Anspruch 4 oder 5, bei welchem die erste Farbe rot, die zweite Farbe blau und die dritte Farbe grün ist.

7. Scanner nach Anspruch 4, 5 oder 6 in Rückbezug auf Anspruch 2 oder irgendeinen darauf rückbezogenen Anspruch, bei welchem die Leuchtstofflampen langgestreckte Röhren umfassen, die auf beiden Seiten und parallel zu der Elementarlinie angeordnet sind.

8. Scanner nach Anspruch 4, 5, 6 oder 7 in Rückbezug auf Anspruch 3, bei welchem die Berechnungsmittel das während der zweiten Lichtausgabeweise der Lampe erzeugte elektronische Bild von dem während der ersten Lichtausgabeweise der zweiten Lampe erzeugten elektronischen Bild subtrahieren.

9. Verfahren zum Betreiben eines Scanners nach irgendeinem der Ansprüche 1 bis 3, welches das Abwechselnde Aktivieren und Inaktivieren der Leuchtstofflampe (11) umfaßt.

10. Verfahren zum Betreiben eines Scanners nach irgendeinem der Ansprüche 4 bis 8, welches das abwechselnde Aktivieren der Leuchtstofflampe (11) und der zweiten Leuchtstofflampe (12) umfaßt.

FIG. 1

FIG. 2

FIG. 3

FIG. 4